# FASCICULE DE BREVET EUROPEEN

(11) **EP 2 235 382 B1**
(45) Date de publication et mention de la délivrance du brevet: **07.11.2012**
(21) Numéro de dépôt: 08863787.1
(22) Date de dépôt: 22.12.2008
(51) Int. Cl.: F16B 4/00

(54) **DISPOSITIF D'ASSEMBLAGE REVERSIBLE**
VORRICHTUNG ZUR LÖSBAREN VERBINDUNG
DEVICE FOR REVERSIBLE ASSEMBLY

(30) Priorité: 21.12.2007 FR 0760299
(43) Date de publication de la demande: 06.10.2010
(73) Titulaire: Cetim-Cermat, 68200 Mulhouse (FR); CENTRE TECHNIQUE DES INDUSTRIES MECANIQUES, F-60300 Senlis (FR)
(72) Inventeur: JURAS, Laurent, F-44300 Nantes (FR); DROBEZ, Hervé, F-68350 Didenheim (FR); LAURENT, Fabrice, F-68800 Leimbach (FR); MEYER, Georges, F-68400 Riedisheim (FR)
(74) Mandataire: Nuss, Laurent
(86) Numéro de dépôt international: PCT/FR2008/052396
(87) Numéro de publication internationale: WO 2009/081076

(56) Documents cités:
- EP-A- 0 503 414
- WO-A-86/04542
- WO-A-93/09372
- FR-A- 2 417 028
- FR-A- 2 867 102
- US-A- 3 379 218
- US-A1- 2004 187 287

## Description

La présente invention concerne le domaine de l'assemblage de deux pièces entre elles, et concerne plus particulièrement les dispositifs d'assemblage amovible.

De tels dispositifs doivent permettre de réaliser un assemblage par frettage, par déformation élastique, par manchonnage ou encore par connexion rapide qui soit, dans tout les cas, réversible, de sorte que les deux pièces peuvent être facilement désolidarisées l'une de l'autre.

A cet effet, des dispositifs de ce type ont été développés, mais ces derniers présentent un certain nombre d'inconvénients.

Certains de ces dispositifs utilisent par exemple des alliages à mémoire de forme. Toutefois, de tels dispositifs requièrent une étape d'éducation thermomécanique impossible à réaliser sur des formes complexes. C'est pourquoi ces alliages sont utilisés dans le domaine de l'assemblage selon des formes simples (manchons, lames, ressorts, fils ...).

Les dépôts US 6 780 042 et US 5 366 254 donnent à cet effet des exemples d'assemblage par déformation élastique et de désassemblage ultérieur des pièces grâce à l'utilisation de fils en alliage à mémoire de forme de sections cylindriques et rectangulaires.

D'autres solutions permettent d'obtenir un assemblage réversible. On peut citer par exemple les dispositifs dont l'assemblage consiste à mettre sous pression l'une des pièces à assembler. Toutefois, ce type de dispositif est difficile et coûteux à mettre en oeuvre. Les dépôts FR 2 843 071, US 4 402 532 et US 2 827 312 sont représentatifs de la complexité de ces dispositifs.

Le document FR 2 417 028 concerne le domaine du frettage utilisant le principe du retrait chimique d'une résine thermodurcissable pendant sa polymérisation. Cette demande décrit un dispositif de serrage de type collier obtenu en mélangeant et moulant des fibres de verre et de la résine thermodurcissable directement sur les objets à serrer. Les forces de serrage sont provoquées par le retrait volumique chimique de la résine thermodurcissable lors du phénomène de polymérisation. La réversibilité du manchonnage est réalisée à l'aide d'un coin ou d'une glissière. L'invention décrite dans cette demande ne divulgue pas l'intégration d'une couche active dans l'épaisseur du composite permettant de serrer et desserrer facilement le dispositif, la maîtrise de la direction de la déformation, ni la réversibilité et la facilité de « séparation » dudit dispositif, le phénomène de polymérisation étant, par nature, un phénomène irréversible.

Le document US 3 379 218 concerne également le domaine du frettage mais cette fois en utilisant le principe des matériaux à état métastable qui n'utilise pas le phénomène de la dilatation thermique. Ce brevet décrit la réalisation d'un manchon ou autre système de serrage sur tube dont les forces de maintien sont obtenues en chauffant sous pression un polymère de préférence cristallin au dessus de sa température de fusion sur un tube de diamètre supérieur à celui normalement utilisé. Cette forme reste stable jusqu'à nouveau chauffage à la température de fusion, au delà de cette température le dispositif se rétracte et revient à sa forme initiale. La réversibilité est obtenue en plaçant sur un côté du manchon un système d'attache mécanique de type bouton qui peut-être fixé définitivement ou non. La déformation est irréversible et s'obtient en jouant sur la mémoire de forme du polymère. Ce brevet ne divulgue donc pas non plus l'intégration de la couche active, la maîtrise directionnelle ou la réversibilité précitées.

Le document EP 0 503 414 A1 a trait au frettage conventionnel par dilatation thermique et décrit la constitution et quelques modes de réalisation de rubans de cerclage destinés à assembler un récipient verseur d'infusion adapté aux fours à micro-ondes et sa poignée. L'ensemble des matériaux devant être notamment transparent aux micro-ondes et résistant aux dilatations successives du récipient. Les matériaux composites répondent particulièrement bien à ces critères.

Le document US 2004/0187287 A1 divulgue un blocage par retour élastique utilisant le phénomène de dilatation thermique. Il décrit de multiples assemblages de type manchonnage, clipsage, réalisés en chauffant les différents éléments à diverses températures. Le principe décrit consiste à chauffer un matériau qui est plus dilaté qu'un autre et lorsqu'on refroidit l'ensemble il y a assemblage. Ce principe de fonctionnement n'est pas adapté à la réalisation d'un dispositif d'assemblage amovible à l'instar de celui prévu dans la présente invention. En effet, alors qu'il est possible de chauffer séparément différentes pièces à différentes températures pour les assembler à une autre température commune il est, dans la pratique (notamment en raison de la conduction thermique), impossible de les séparer avec ce principe.

Le document WO 86/04542 A1 a pour objet des polymères à mémoire de forme recouvrant leurs formes à une température supérieure à celle de leur température de transition vitreuse (qui est supérieure à 25 °C). L'application principale est l'assemblage de pièces situées sous un capot moteur d'une automobile c'est-à-dire dans un environnement chaud. Cet environnement va rétracter le polymère pour améliorer la qualité de la fixation.

Le document WO 93/09372 A1 décrit des manchons rétrécissables à la chaleur comprenant des matériaux rétrécissables dans une certaine direction lorsqu'on les chauffe, un matériau tissé constitué de fibres synthétiques étant interposé entre le matériau thermo-rétractable et les polymères de couverture externes. Ces manchons, éventuellement utilisés en collaboration avec des colles thermo-activables, des matériaux d'étanchéité ou des thermo-peintures, sont destinés à relier des conduits ou câbles de façon permanente et la plus fiable possible. A cette fin, les manchons décrits fonctionnent sur le principe de la thermo-réticulation avec des peroxydes organiques, silanes, etc. Ce document ne décrit pas un dispositif d'assemblage amovible dans lequel la variation de la température permet un assujettissement ou un désengagement des pièces à assembler.

Le document FR 2 867 102 A décrit un dispositif d'assemblage amovible de deux pièces selon le préambule de la revendication 1.

L'objet de la présente invention est de proposer une alternative à ces dispositifs connus, qui soit facile à mettre en oeuvre et de coût limité et qui permet de réaliser un assujettissement contrôlé de deux éléments entre eux.

Un tel dispositif pourrait également être piloté ou contrôlé à distance, par exemple par l'intermédiaire d'un dispositif électrique. Ceci permettrait de réaliser un système de verrouillage/déverrouillage, ou d'ouverture/fermeture susceptible de trouver des applications dans des conditions de fonctionnement extrême, dangereux, dans des endroits difficilement accessibles ou pollués.

A cet effet, l'invention a pour objet un dispositif d'assemblage amovible de deux pièces selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
Les figures 1A et 1B sont des vues en perspective de deux pièces tubulaires, respectivement avant et après leur assemblage par l'intermédiaire d'un dispositif d'assemblage de l'invention,
la figure 2 est une vue représentant le contour extérieur, vu en coupe transversale, du dispositif d'assemblage des figures 1A et 1B dans son état désactivé, et,
la figure 3 représente les différentes couches de matériaux constituant le matériau composite intégré dans les couches actives du dispositif selon l'invention.

Les figures annexées représentent un dispositif d'assemblage amovible de deux pièces 2 et 3 caractérisé en ce qu'il consiste en au moins un moyen 1 comportant au moins une région active 4 intégrant un matériau composite 5 à déformation continue et contrôlée sous l'effet d'une variation de température réglable d'au moins une couche active 6 dudit matériau composite 5 et induisant, dans chaque région dudit moyen 1 comportant une telle région active 4, une déformation de direction et d'amplitude correspondantes entraînant un assujettissement des deux pièces 2 et 3 entre elles ou un désengagement de ces dernières.

Un matériau composite 5 susceptible d'être utilisé dans le dispositif d'assemblage selon la présente invention peut être du type de ceux décrits dans le dépôt n° 04 02163 au nom de la demanderesse.

Ils présentent l'avantage d'être facilement intégrés dans la structure d'un moyen 1 dont il est souhaité de contrôler et de commander la déformation. L'utilisation de tels matériaux composite 5 permet d'obtenir des déformations parfaitement contrôlées, prévisibles et réversibles au niveau des régions dans lesquelles ils sont intégrés.

Dans la description qui suit, il faut comprendre par état activé du moyen 1 un état dans lequel la ou les couches actives 6 des matériaux composites 5 intégrés dans le moyen 1 sont soumises à une variation de température et par état non activé du moyen 1, un état dans lequel la ou les couches actives 6 desdits matériaux composites 5 ne sont pas soumises à une telle variation de température. De même, l'état activé des régions actives 4 correspond à un état dans lequel la ou les couches actives 6 du matériau composite 5 de ces régions sont soumises à une variation de température.

Selon un premier mode de réalisation de l'invention, le moyen 1 peut être sous la forme d'une pièce rapportée indépendante assurant l'assujettissement des deux pièces 2 et 3 à assembler.

Selon un second mode de réalisation de l'invention, le moyen 1 peut être intégré dans l'une des deux pièces 2 et 3 à assembler.

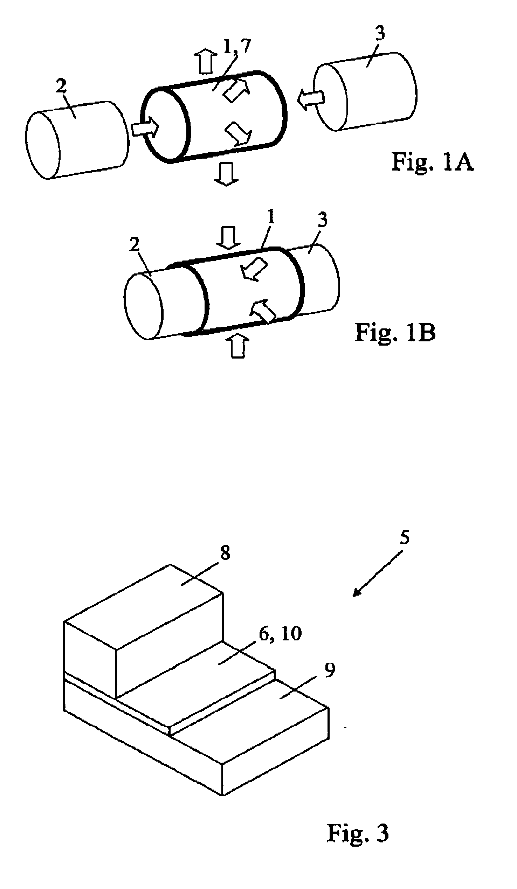

Dans le cadre d'une première variante du premier mode de réalisation de l'invention, le moyen 1 peut être réalisé sous la forme d'un manchon 7 destiné à assembler deux pièces tubulaires aboutées et de même diamètre. Un tel assemblage est représenté aux figures 1A et 1B annexées.

Pour réaliser cet assemblage, le manchon 7 peut présenter, à l'état non activé de ses régions actives 4, un diamètre intérieur sensiblement inférieur au diamètre extérieur des pièces 2 et 3 et permettant au manchon 7 d'exercer une pression sur les pièces 2 et 3 lorsqu'il est emmanché sur ces dernières, et peut comprendre des régions actives 4 dont l'activation entraîne une augmentation du diamètre intérieur dudit manchon 7 par déformation de ce dernier, permettant un manchonnage de ce dernier sur les pièces 2 et 3 aboutées.

A cet effet, les régions actives 4 peuvent être au moins au nombre de trois et être intégrées dans la paroi du manchon 7, de manière à être parallèles les unes par rapport aux autres et à l'axe longitudinal du manchon 7 et elles peuvent être situées à équidistance les unes des autres.

En variante, le manchon 7 peut présenter au moins une région active 4 intégrée dans sa paroi sous la forme d'un anneau situé dans un plan perpendiculaire à l'axe longitudinal du manchon 7.

Dans le cas du manchonnage de deux pièces 2 et 3 réalisées en un matériau sensible à la chaleur, par exemple du métal, il peut être nécessaire d'éviter que les régions actives 4 ne soient en contact avec ces pièces 2 et 3, afin d'empêcher une dilatation de ces dernières par conduction thermique entre le manchon 7 et les pièces 2 et 3. En effet, selon le matériau utilisé pour réaliser la couche active 6 des matériaux composites 5, une température de 100°C peut être atteinte pour l'activation des couches actives.

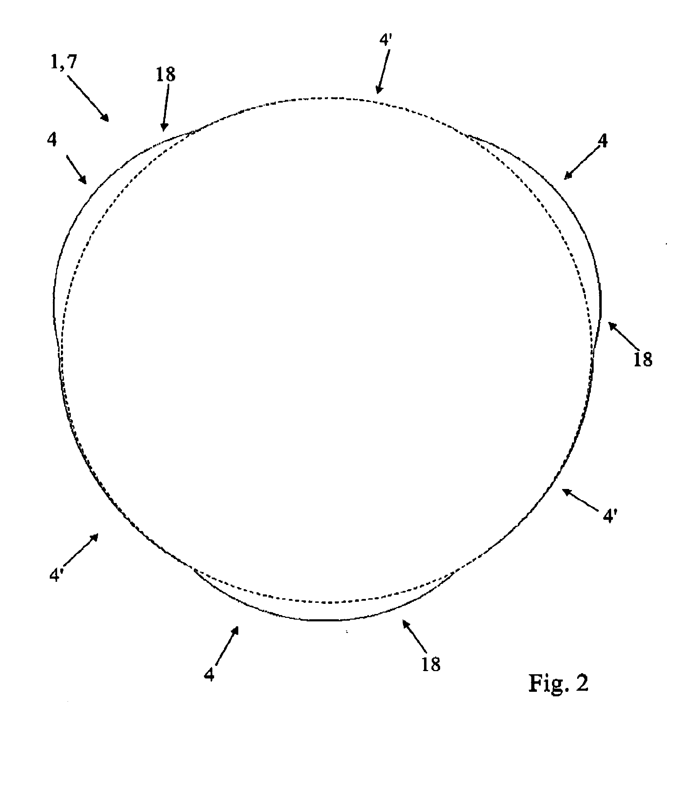

A cet effet, et selon une caractéristique de l'invention, le manchon 7 peut comprendre des régions actives 4 intégrant un matériau composite 5 et des régions non actives 4' n'intégrant pas de matériau composite 5 et peut présenter une section de forme générale circulaire dont la paroi interne est circulaire au niveau des parties coïncidant avec les régions non actives et présente des décrochements 18 au niveau des parties coïncidant avec les régions actives 4, de telle sorte qu'à l'état non activé du manchon 7, il présente une forme telle que ses régions non actives 4' exercent une pression sur les pièces 2 et 3 et que ses régions actives 4 ne sont pas en contact surfacique avec les parois externes des pièces 2 et 3. La figure 2 représente une vue en coupe transversale d'un tel manchon 7 à l'état non activé de ses régions actives 4.

La déformation étant proportionnelle à la variation de température appliquée et due au différentiel de déformation entre les couches constitutives du manchon 7, la structure et les matériaux constituant le manchon 7 peuvent être choisis tels qu'un moment de flexion ou de torsion est provoqué lors de l'activation des régions actives 4, de sorte que ces dernières se déforment pour entraîner une augmentation du diamètre interne dudit manchon 7. De cette manière, le manchon 7 peut être emmanché, dans son état activé, sur les deux pièces 2 et 3 à assembler. Il suffit ensuite de supprimer l'activation des couches actives 4 pour que le manchon 7 retrouve sa forme initiale dans laquelle son diamètre interne est plus petit que le diamètre externe des pièces 2 et 3, ce qui entraîne un assemblage des pièces 2 et 3 l'une à l'autre par pression, au moins par zones, du manchon sur ces pièces 2 et 3.

Dans tous les cas, l'activation peut être réalisée par l'augmentation de la température de chaque couche active 4, de sorte que l'assujettissement des pièces 2 et 3 entre elles est dû à la rétractation du manchon 7 lors de son refroidissement.

Dans une seconde variante de ce mode de réalisation, le moyen 1 peut être réalisé sous la forme d'un anneau et destiné à assembler deux pièces tubulaires de diamètre différent.

Cet anneau peut présenter, dans son état désactivé, un diamètre interne supérieur au diamètre externe d'une première 2 des pièces à assembler et un diamètre externe inférieur au diamètre interne de la seconde 3 desdites pièces 2 et 3, de sorte que ledit anneau peut être susceptible d'emmancher, dans son état désactivé, la première pièce 3 et d'être emmanché par la seconde pièce 3, et ledit anneau peut présenter des régions actives 4 dont l'activation peut entraîner une déformation de ce dernier dans les deux directions radiales pour assujettir les deux pièces 2 et 3 l'une à l'autre. Lorsque les régions actives 4 de l'anneau sont activées, la déformation dudit anneau est donc telle qu'il est comprimé entre les deux pièces 2 et 3 qui sont ainsi assemblées l'une à l'autre.

De manière caractéristique, le moyen 1 peut être constitué par l'assemblage d'une première couche 8 de résine comprenant des fibres aramides reliée à une seconde couche 9 de résine comprenant des fibres de verre et les régions actives 4 peuvent correspondre à des régions dans lesquelles une couche active 10 à base de résine chargée en fibres de carbone est intégrée entre la première 8 et la seconde 9 couches, ladite couche active étant reliée à une alimentation électrique. Une telle structure est représentée à la figure 3.

Ainsi, lorsqu'une puissance électrique donnée est appliquée aux couches actives 4, la température de ces dernières s'élève et se propage aux couches voisines par conduction thermique, créant un gradient thermique au sein du moyen 1. Ce gradient thermique entraîne une dilatation des couches inactives 8 et 9, et donc une déformation du moyen 1, au moins au niveau de ses régions comprenant une région active 4.

La durée nécessaire pour atteindre une déformation donnée dépend de l'intensité de la puissance électrique injectée dans les couches actives 4. Ainsi, par exemple, dans le cas du manchon 7 présentant une longueur de 200 mm, la déformation utile est obtenue après 70 secondes pour une puissance de 3950 W/m², soit 128 W.

En ce qui concerne les déformations, dans le cas du manchon 7 de 200 mm de longueur, réalisé à partir d'une première couche 8 de résine d'une épaisseur de 0,4 mm comprenant des fibres aramides reliée à une seconde couche 9 de résine d'une épaisseur de 0,65 mm comprenant des fibres de verre par l'intermédiaire d'une couche active 10 d'une épaisseur de 0,1 mm à base de résine chargée en fibres de carbone, on obtient les augmentations de diamètre suivantes :
- 3 mm lorsque le diamètre initial du manchon 7 est de 200 mm et avec une puissance totale de 248 W, et
- 0,6 mm lorsque le diamètre initial du manchon 7 est de 100 mm et avec une puissance totale de 124 W.

Dans le cas du manchon 7 précité, dans lequel la première couche 8 de résine présente une épaisseur de 0,8 mm et la seconde couche 9 de résine de 1,3 mm l'on obtient, pour un diamètre initial de 100 mm, une augmentation de diamètre de 0,4 mm avec une puissance totale de 124 W.

Pour s'affranchir des perturbations thermiques extérieures, l'anneau ou le manchon 7 peuvent avantageusement être isolés thermiquement par l'intégration de couches de matériau isolant dans leur structure ou sur leur paroi extérieure.

En outre, pour assurer l'étanchéité du dispositif d'assemblage actif, on peut réaliser un manchon 7 équipé de joints d'étanchéité à ses extrémités constituant des régions non actives et qui présentent donc un diamètre constant.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Dispositif d'assemblage amovible de deux pièces (2 et 3) consistant en au moins un moyen (1) comportant au moins une région active (4) intégrant un matériau composite (5) à déformation continue, contrôlée et réversible sous l'effet d'une variation de température réglable d'au moins une couche active (6) dudit matériau composite (5) et induisant, dans chaque région dudit moyen (1) comportant une telle région active (4), une déformation de direction et d'amplitude correspondantes entraînant un assujettissement des deux pièces (2 et 3) entre elles ou un désengagement de ces dernières, **caractérisé en ce que** le moyen (1) est réalisé sous la forme d'un manchon (7) rapporté destiné à assembler deux pièces (2, 3) tubulaires aboutées et de même diamètre, ledit manchon (7) présentant, à l'état non activé de ses régions actives (4), un diamètre intérieur sensiblement inférieur au diamètre extérieur des pièces (2 et 3) et permettant au manchon (7) d'exercer une pression sur les pièces (2 et 3) lorsqu'il est emmanché sur ces dernières, et comprenant des régions actives (4) dont l'activation entraîne une augmentation du diamètre intérieur dudit manchon (7) par déformation de ce dernier, permettant un manchonnage de ce dernier et
**en ce que** les régions actives (4) sont au moins au nombre de trois et sont intégrées dans la paroi du manchon (7), de manière à être parallèles les unes par rapport aux autres et à l'axe longitudinal du manchon (7) et **en ce qu'**elles sont situées à équidistance les unes des autres.

2. Dispositif d'assemblage, selon la revendication 1, **caractérisé en ce que** le manchon (7) comprend des régions actives (4) intégrant un matériau composite (5) et des régions non actives (4') n'intégrant pas de matériau composite (5) et présente une section de forme générale circulaire dont la paroi interne est circulaire au niveau des parties coïncidant avec les régions non actives et présente des décrochements (18) au niveau des parties coïncidant avec les régions actives (4), de telle sorte qu'à l'état non activé du manchon (7), il présente une forme telle que ses régions non actives (4') exercent une pression sur les pièces (2 et 3) et que ses régions actives 4 ne sont pas en contact surfacique avec les parois externes des pièces (2 et 3).

3. Dispositif d'assemblage, selon la revendication 1 ou 2, **caractérisé en ce que** le moyen (1) est constitué par l'assemblage d'une première couche (8) de résine comprenant des fibres aramides reliée à une seconde couche (9) de résine comprenant des fibres de verre et **en ce que** les régions actives (4) correspondent à des régions dans lesquelles une couche active (10) à base de résine chargée en fibres de carbone est intégrée entre la première (8) et la seconde (9) couches, ladite couche active étant reliée à une alimentation électrique.

## Claims

1. Device for the removable assembly of two parts (2 and 3) consisting of at least one means (1) comprising at least one active area (4) integrating a composite material (5) for continuous, controlled and reversible deformation under the effect of a controlled variation of temperature of at least one active layer (6) of said composite material (5) and inducing in each area of said means (1) comprising such an active area (4) a corresponding deformation of direction and amplitude resulting in the fixing of the two parts (2 and 3) relative to one another or the disconnection of the latter, **characterised in that** the means (1) is in the form of an applied sleeve (7) designed to assemble two abutting tubular parts (2, 3) of the same diameter, said sleeve (7) having in the inactive state of its active areas (4) an internal diameter substantially smaller than the external diameter of the parts (2 and 3), allowing the sleeve (7) to exert pressure on the parts (2 and 3) when it is fitted onto the latter and comprising active areas (4), the activation of which involves an increase of the internal diameter of said sleeve (7) by deforming the latter, enabling the encasing thereof and
**in that** the active areas (4) are at least three in number and are integrated into the wall of the sleeve (7) so as to be parallel to one another and to the longitudinal axis of the sleeve (7) and **in that** they are located equidistantly from one another.

2. Assembly device according to claim 1, **characterised in that** the sleeve (7) comprises active areas (4) integrating a composite material (5) and inactive areas (4') not integrating a composite material (5) and has a cross section that is generally circular in shape, the internal wall of which is circular in areas coinciding with the inactive areas and has offsets (18) in areas coinciding with the active areas (4) such that in the inactive state of the sleeve (7) it is shaped such that its inactive areas (4') exert pressure on parts (2 and 3) and its active areas (4) are not in surface contact with the external walls of parts (2 and 3).

3. Assembly device according to claim 1 or 2, **characterised in that** the means (1) is formed by the assembly of a first layer (8) of resin comprising aramid fibres joined to a second layer (9) of resin comprising glass fibres and **in that** the active areas (4) correspond to areas in which a resin-based active layer (10) charged with carbon fibres is integrated between the first (8) and the second (9) layers, said active layer being connected to an electrical power supply.

## Patentansprüche

1. Vorrichtung zur lösbaren Verbindung von zwei Teilen (2 und 3), die aus mindestens einer Einrichtung (1) besteht, die zumindest einen aktiven Bereich (4) umfasst, in den ein Verbundmaterial (5) mit kontinuierlicher, gesteuerter und umkehrbarer Verformung unter der Wirkung einer einstellbaren Temperaturänderung von zumindest einer aktiven Schicht (6) des Verbundmaterials (5) eingefügt ist und in jedem Bereich dieser Einrichtung (1), die einen derartigen aktiven Bereich (4) aufweist, eine Verformung mit einer Richtung und Stärke herbeiführt, die eine Verbindung der beiden Teile (2 und 3) miteinander oder ein Trennen dieser Teile hervorruft, **dadurch gekennzeichnet, dass** die Einrichtung (1) in Form einer Verbindungsmuffe (7) ausgebildet ist, die zur Verbindung von zwei rohrförmigen, aneinander anstoßenden und den gleichen Durchmesser aufweisenden Teilen (2, 3) bestimmt ist, wobei die Muffe (7) im nicht aktiven Zustand ihrer aktiven Bereiche (4) einen Durchmesser aufweist, der wesentlich kleiner als der Außendurchmesser der Teile (2 und 3) ist und es der Muffe (7) ermöglicht, einen Druck auf die Teile (2 und 3) auszuüben, wenn sie auf die letzteren aufgeschoben ist, und aktive Bereiche (4) umfasst, deren Aktivierung eine Vergrößerung des Innendurchmessers der Muffe (7) durch Verformung der letzteren hervorruft, wodurch ein Aufschieben der Letzteren ermöglicht wird, und
dass die aktiven Bereiche (4) in einer Anzahl von zumindest drei Bereichen vorgesehen und in die Wand der Muffe (7) derart eingefügt sind, dass sie parallel zueinander und zur Längsachse der Muffe (7) sind, und dass sie unter gleichen Abständen voneinander angeordnet sind.

2. Verbindungsvorrichtung nach Anspruch 1, **dadurch gekennzeichnet, dass** die Muffe (7) aktive Bereiche (4), in die ein Verbundmaterial (5) eingefügt ist, und nicht aktive Bereiche (4') umfasst, in die kein Verbundmaterial (5) eingefügt ist, und einen Querschnitt mit allgemein kreisförmiger Form aufweist, deren Innenwand im Bereich der mit den nicht aktiven Bereichen der Teile zusammenfallenden Teile, und Ausbuchtungen (18) im Bereich der Teile aufweisen, die mit den aktiven Bereichen (4) zusammenfallen, derart, dass die Hülse im nicht aktiven Zustand (7) eine derartige Form aufweist, dass ihre nicht aktiven Bereiche (4') einen Druck auf die Teile (2 und 3) ausüben, und dass ihre aktiven Bereiche (4) nicht in Oberflächenkontakt mit den Außenwänden der Teile (2 und 3) stehen.

3. Verbindungsvorrichtung nach den Ansprüchen 1 oder 2, **dadurch gekennzeichnet, dass** die Einrichtung (1) durch die Verbindung einer ersten Schicht (8) aus einem Harz gebildet ist, das Aramid-Fasern umfasst, die mit einer zweiten Schicht (9) verbunden ist, die ein Harz mit Glasfasern umfasst, und dass die aktiven Bereiche (4) Bereichen entsprechen, in denen eine aktive Schicht (10) auf der Grundlage einer mit Kohlenstofffasern gefüllten Harzschicht zwischen der ersten (8) und der zweiten (9) Schicht eingefügt ist, wobei die aktive Schicht mit einer elektrischen Speiseeinrichtung verbunden ist.
